(19)

**Europäisches Patentamt**
**European Patent Office**
**Office européen des brevets**

(11) **EP 3 336 067 A1**

(12) **EUROPEAN PATENT APPLICATION**

(43) Date of publication:
**20.06.2018 Bulletin 2018/25**

(51) Int Cl.:
***C04B 41/71*** *(2006.01)*

(21) Application number: **16205161.9**

(22) Date of filing: **19.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Eternit GmbH**
**69126 Heidelberg (DE)**

(72) Inventor: **SCHMIDT, Mr. Gerhard**
**76669 Bad Schönborn (DE)**

(74) Representative: **Vaeck, Elke et al**
**Etex Services NV**
**Kuiermansstraat 1**
**1880 Kapelle-op-den-Bos (BE)**

(54) **COATED FIBER CEMENT PRODUCTS AND METHODS FOR THE PRODUCTION THEREOF**

(57)     The present invention relates to coated fiber cement products as well as to methods for manufacturing such products. In particular, the present invention provides processes for manufacturing coated fiber cement products, these processes comprising the steps of:
(i) providing a cured fiber cement product having at least one surface;
(ii) applying a primer to the at least one surface of the cured fiber cement product;
(iii) providing at least one layer of a radiation curable composition to the at least one surface, which radiation curable composition comprises at least one pigment; and

(iv) curing the layer of radiation curable composition by radiation.

Finally, the present invention provides coated fiber cement products obtainable by such processes and uses of these fiber cement products as building materials. In particular embodiments, the coated fiber cement products produced by the processes of the present invention can be used to provide an outer surface to walls, both internal as well as external, a building or construction, e.g. as façade plate, siding, roofing element, etc. such as for instance a slate.

EP 3 336 067 A1

## Description

### Field of the invention

The present invention relates to coated fiber cement products as well as to methods for manufacturing such products. The present invention further relates to various uses of these coated fiber cement products, in particular as building materials.

### Background of the invention

Coated fiber cement products are well known and widely used as building materials.
European patent EP1914215B1 describes such coated fiber cement products.
A remaining disadvantage of the known coated fiber cement products is, however, that the pigments present in the coating layer(s) seem to chemically disintegrate gradually in time. This results in the formation of visible brownish spots within the coating layer(s), which is undesirable for obvious esthetical reasons.
Up to now, there is no efficient strategy to manage this problem.

### Summary of the invention

An object of the present invention is to provide improved coated fiber cement products, as well as processes for the production thereof, which products do not suffer from the phenomenon of chemical disintegration of pigments in the coating layer(s) and the undesirable visible consequences thereof.
Without being bound to or limited by any theory or hypothesis, further experimental research performed by the present inventors appeared to reveal that the chemical destabilization, disintegration and/or destruction of the pigments in the different coating layer(s) of coated fiber cement products is caused by the alkaline pH of the moisture, that is still present within the fiber cement product but is gradually driven out and migrates through the pigmented coating layers. As a consequence, any pigments present in these coating layer(s), which are typically alkaline instable, are damaged and disintegrate to form visible brownish spots at the surface of the fiber cement products.
The present invention provides processes where such migration of the pigments through the coating layers is substantially limited and in most cases even prevented.
According to a first aspect, the present invention provides processes for manufacturing coated fiber cement products, wherein these processes comprise the steps of:

(i) providing a cured fiber cement product having at least one surface;
(ii) applying a primer to the at least one surface of the cured fiber cement product;
(iii) providing at least one layer of a radiation curable composition to the at least one surface, which radiation curable composition comprises at least one pigment; and
(iv) curing the layer of radiation curable composition by radiation.

In particular embodiments of these processes, the radiation curable composition comprises organic pigments.
In certain particular embodiments of these processes, the radiation curable composition comprises one to five different pigments.
In further particular embodiments of these processes, the radiation curable composition has a hiding power of about 90% to about 100%.
In still further particular embodiments of these processes, the radiation curable composition has a pigment volume concentration (PVC) in the range of about 2 to about 10 %.
In yet further particular embodiments of these processes, the thickness of the radiation curable composition layer ranges from about $10\mu$m to about $120\mu$m.
In yet further particular embodiments of these processes, the radiation curable composition is a UV-curable compositions.
In other further particular embodiments of these processes, the radiation curable composition is an electron beam curable composition.
In particular embodiments of these processes, the radiation curable composition is an isocyanate-bearing polyurethane having ethylenically unsaturated double bonds.
In further particular embodiments of these processes, the radiation curable composition is covered with a radiation permeable film prior to the curing step.
In further particular embodiments of these processes, the curing step is preceded by a treatment of the at least one layer of a radiation curable composition by means of an excimer laser.

In yet further particular embodiments of these processes, the primer comprises at least one pigment.

In particular embodiments of these processes, the primer is an acrylic primer.

In a second aspect, the present invention provides fiber cement products obtainable by the processes of the present invention.

In a third aspect, the present invention provides coated fiber cement products comprising:

a cured fiber cement substrate, which is covered on at least part of its surface with

a) a first layer of a primer, and

b) a second layer of a radiation cured composition, which second layer is positioned on top of said first layer and which radiation cured composition comprises at least one pigment.

In particular embodiments, the second layer of the radiation cured composition of the coated fiber cement products comprises organic pigments.

In certain particular embodiments, the second layer of the radiation cured composition of the coated fiber cement products comprises one to five different pigments.

In further particular embodiments, the second layer of the radiation cured composition of the coated fiber cement products has a hiding power of about 90% to about 100%.

In still further particular embodiments, the second layer of the radiation cured composition of the coated fiber cement products has a pigment volume concentration (PVC) in the range of about 2 to about 10 %.

In yet further particular embodiments, the thickness of the second layer of the radiation cured composition of the coated fiber cement products ranges from about $10\mu m$ to about $120\mu m$.

In yet further particular embodiments, the radiation cured composition of the coated fiber cement products is a UV-cured composition.

In other further particular embodiments, the radiation cured composition of the coated fiber cement products is an electron beam cured composition.

In other further particular embodiments, the primer of the coated fiber cement products comprises at least one pigment.

In further particular embodiments, the primer of the coated fiber cement products is an acrylic primer.

In particular embodiments, the coated fiber cement products of the present invention are building products.

In further particular embodiments, the coated fiber cement products of the present invention are slates. In other particular embodiments, the coated fiber cement products of the present invention can be used to provide an outer surface to walls, both internal as well as external, a building or construction, e.g. as façade plate, siding, etc.

In particular embodiments, the cured fiber cement substrate of the coated fiber cement products of the present invention is an air-cured fiber cement substrate.

In a fourth aspect, the present invention uses of the fiber cement products obtainable by the processes of the present invention as building materials. In particular embodiments, the fiber cement products produced by the processes of the present invention can be used to provide an outer surface to walls, both internal as well as external, a building or construction, e.g. as façade plate, siding, etc.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Description of illustrative embodiments**

It is to be noted that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The terms "(fiber) cementitious slurry" or "(fiber) cement slurry" as referred to herein generally refer to slurries at least comprising water, fibers and cement. The fiber cement slurry as used in the context of the present invention may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives.

"Fiber(s)" present in the fiber cement slurry as described herein may be for example process fibers and/or reinforcing fibers which both may be organic fibers (typically cellulose fibers) or synthetic fibers (polyvinylalcohol, polyacrilonitrile, polypropylene, polyamide, polyester, polycarbonate, etc.).

"Cement" present in the fiber cement slurry as described herein may be for example but is not limited to Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

The terms "predetermined" and "predefined" as used herein when referring to one or more parameters or properties generally mean that the desired value(s) of these parameters or properties have been determined or defined beforehand, i.e. prior to the start of the process for producing the products that are characterized by one or more of these parameters or properties.

A "(fiber cement) sheet" as used herein, also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide an outer surface to walls, both internal as well as external a building or construction, e.g. as façade plate, siding, etc.

The term "pigment volume concentration (abbreviated as PVC)" as used herein generally refers to the amount of pigment(s) versus the total amount of solids (i.e. pigment(s), binder(s), other solids) in a coating composition and can be calculated via the following mathematical formula:

"Pigment volume concentration" (expressed in %) = "PVC" (expressed in %) =

Volume of pigment/ (Volume of solids) * 100 (expressed in %) =

Volume of pigment/ (Volume of pigment + Volume of solid binder) * 100 (expressed in %) =

Volume of pigment/ (Volume of pigment + Volume of non-volatile binder) * 100 (expressed in %)

The term "UV-curable" refers to a composition that can polymerize upon application of UV irradiation. Typically, this at least implies the presence of photo-polymerizable monomers or oligomers, together with photoinitiators and/or photosensitizers.

The terms "mass-coloured", "coloured in the mass", "through-coloured" when referring to a fiber cement product has the meaning that at least part of the, and preferably the entire, internal structure of that fiber cement product comprises at least one pigment.

The term "hiding power" as used herein is the property of a coating which enables it to hide the surface over which it is applied. The hiding power is directly linked to the film application method and the film thickness. In a coating with strong hiding power, the pigment particles scatter the light so strongly that it hardly reaches the substrate. If residual light is reflected from the substrate, it is so strongly scattered that it does not reach the eye. There are a number of standard test methods available. For instance, BS 3900-D4 (i.e. also referred to as ISO 2814), BS 3900-D7 (i.e. also referred to as ISO 6504/1) or BS 3900-D11 (also referred to as ISO 6504/3) are standard method for determining the hiding power of coatings.

The term "transparent" or "transparency" when referring to a coating composition or a coating layer refers to the physical characteristic of allowing light to pass through the coating without being scattered. Transparency can be measured with any method known in the art. For instance, a haze meter measures the transparency, haze, see-through quality, and total transmittance of a coating, based on how much visible light is diffused or scattered when passing through the coating. Haze is measured with a wide angle scattering test in which light is diffused in all directions which results in a loss of contrast. That percentage of light that when passing through deviates from the incident beam greater than 2.5 degrees on average is defined as haze. See through quality is measured with a narrow angle scattering test in which light is diffused in a small range with high concentration. This test measures the clarity with which finer details can be seen through the coating being tested. The haze meter also measures total transmittance. Total transmittance is the measure of the total incident light compared to the light that is actually transmitted (e.g. total transmittance). So the incident light may be 100%, but because of absorption and reflection the total transmittance may only be 94%. The data gained from the haze meter can be transferred to a PC for further data processing to ensure a consistent product.

The invention will now be further explained in detail with reference to various embodiments. It will be understood that each embodiment is provided by way of example and is in no way limiting to the scope of the invention. In this respect, it will be clear to those skilled in the art that various modifications and variations can be made to the present invention without departing from the scope or spirit of the invention. For instance, features illustrated or described as part of one embodiment, can be used in another embodiment to yield a still further embodiment. Thus, it is intended that the present invention covers such modifications and variations as encompassed within the scope of the appended claims and equivalents thereof.

The present invention provides improved coated fiber cement products, as well as processes for the production thereof, which products do not suffer from the phenomenon of chemical disintegration of pigments in the coating layer(s) and the undesirable visible consequences thereof.

Extensive experimental research performed by the present inventors appeared to reveal that the chemical destabilization, disintegration and/or destruction of the pigments in the different coating layer(s) of coated fiber cement products is caused by the alkaline pH of the moisture, that is still present within the fiber cement product but is gradually driven out and migrates through the pigmented coating layers. As a consequence, any pigments present in these coating layer(s), which are typically alkaline instable, are damaged and disintegrate to form visible brownish spots at the surface of the fiber cement products.

The present invention provides processes where such migration of the pigments through the coating layers is substantially limited and in most cases completely prevented.

Thus, in a first aspect, the present invention provides processes for providing coated fiber cement products, wherein these processes comprise the steps of:

(i) providing a cured fiber cement product having at least one surface;
(ii) applying a primer to the at least one surface of the cured fiber cement product;
(iii) providing at least one layer of a radiation curable composition to the at least one surface coated with said primer, which radiation curable composition comprises at least one pigment; and
(iv) curing the layer of radiation curable composition by radiation.

The first step of the processes of the invention comprises providing a cured fiber cement product having at least one surface, which step can be performed according to any method known in the art for preparing fiber cement products.

For example, a fiber cement slurry can first be prepared by one or more sources of at least cement, water and fibers. In certain specific embodiments, these one or more sources of at least cement, water and fibers are operatively connected to a continuous mixing device constructed so as to form a cementitious fiber cement slurry. In particular embodiments, when using cellulose fibers or the equivalent of waste paper fibers, a minimum of about 3%, such as about 4%, of the total slurry mass of these cellulose fibers is used. In further particular embodiments, when exclusively cellulose fibers are used, between about 4% to about 12%, such as more particularly, between about 7% and about 10%, of the total slurry mass of these cellulose fibers is used. If cellulose fibers are replaced by short mineral fibers such as rock wool, it is most advantageous to replace them in a proportion of 1.5 to 3 times the weight, in order to maintain approximately the same content per volume. In long and cut fibers, such as glass fiber rovings or synthetic high-module fibers, such as polypropylene, polyvinyl acetate, polycarbonate or acrylonitrile fibers the proportion can be lower than the proportion of the replaced cellulose fibers. The fineness of the fibers (measured in Shopper-Riegler degrees) is in principle not critical to the processes of the invention. Yet in particular embodiments, it has been found that a range between about 15 DEG SR and about 45 DEG SR can be particularly advantageous for the processes of the invention.

Once a fiber cement slurry is obtained, the manufacture of the fiber-reinforced cement products can be executed according to any known procedure. The process most widely used for manufacturing fiber cement products is the Hatschek process, which is performed using a modified sieve cylinder paper making machine. Other manufacturing processes include the Magnani process, injection, extrusion, flow-on and others. In particular embodiments, the fiber cement products of the present invention are provided by using the Hatschek process. The "green" or uncured fiber cement product is optionally post-compressed usually at pressures in the range from about 22 to about 30 MPa to obtain the desired density.

The processes according to the present invention may further comprise the step of cutting the fiber cement products to a predetermined length to form a fiber cement product. Cutting the fiber cement products to a predetermined length can be done by any technique known in the art, such as but not limited to water jet cutting, air jet cutting or the like. The fiber cement products can be cut to any desirable length, such as but not limited to a length of between about 1 m and about 15 m, such as between about 1 m and about 10 m, more particularly between about 1 m and about 5 m, most particularly between about 1 m and about 3 m.

It will be understood by the skilled person that the processes of the present invention may further comprise additional steps of processing the produced fiber cement products.

For instance, in certain particular embodiments, during the processes of the present invention, the fiber cement slurry and/or the fiber cement products may undergo various intermediate treatments, such as but not limited to treatment with one or more hydrophobic agents, treatment with one or more flocculants, additional or intermediate pressing steps, etc.

As soon as the fiber cement products are formed, these are trimmed at the lateral edges. The border strips can optionally be recycled through immediate mixing with the recycled water and directing the mixture to the mixing system again.

After manufacturing, the obtained fiber cement products are cured. Indeed, after production, fiber cement products can be allowed to cure over a time in the environment in which they are formed, or alternatively can be subjected to a thermal cure (e.g. by autoclaving or the like).

In further particular embodiments, the "green" fiber cement product is cured, typically by curing to the air (air cured fiber cement products) or under pressure in presence of steam and increased temperature (autoclave cured). For autoclave cured products, typically sand is added to the original fiber cement slurry. The autoclave curing in principle results in the presence of 11.3 Å (angstrom) Tobermorite in the fiber cement product.

In yet further particular embodiments, the "green" fiber cement product may be first pre-cured to the air, after which the pre-cured product is further air-cured until it has its final strength, or autoclave-cured using pressure and steam, to give the product its final properties.

In particularly preferred embodiments, the cured fiber cement products in the processes of the present invention are air-cured fiber cement slates. Such air-cured fiber cement slates can be used for different applications in the building industry, such as for instance for roofing applications and for façade applications.

In particular embodiments of the present invention, the processes may further comprise the step of thermally drying the obtained fiber cement products. After curing, the fiber cement product being a panel, sheet or plate, may still comprise a significant weight of water, present as humidity. This may be up to 10 even 15 %w, expressed per weight of the dry product. The weight of dry product is defined as the weight of the product when the product is subjected to drying at 105°C in a ventilated furnace, until a constant weight is obtained.

In certain embodiments, the fiber cement product is dried. Such drying is done preferably by air drying and is terminated when the weight percentage of humidity of the fiber cement product is less than or equal to 8 weight %, even less than or equal to 6 weight %, expressed per weight of dry product, and most preferably between 4 weight % and 6 weight %, inclusive.

The further step in the processes of the present invention comprises applying a primer to the at least one surface of the cured fiber cement product. This step involves the use of a primer coating composition comprising a (i.e. at least one) binder and optionally a pigment.

Binders and pigments for primers are known in the art and are not critical to the invention as long as the primers are alkaline stable and suitable for use on fiber cement surfaces.

In particular embodiments, the primer is a conventional coating used in the process according to the invention and is not curable by radiation or by chemical crosslinking. Suitable primer coatings are those with binders obtained by aqueous free radical or ionic emulsion polymerization. Acrylic and/or methacrylic (co)polymers are particularly preferred as binders of the primer coatings. In particular embodiments, the primer is a water-based acrylic primer, which has the property of reducing the migration of alkaline moisture out of the fiber cement product. This has the advantage that any pigments present in the coating layers on top of this primer are at least partly prevented from being subjected to alkaline attack.

These acrylic and/or methacrylic (co)polymers are usually prepared by aqueous radically initiated emulsion polymerization of esters of acrylic acid and/or methacrylic acid with C1-C12 alkanols as well as a minor amount of acrylic and/or methacrylic acid as monomers. Preference is given in particular to esters of acrylic and methacrylic acid with C1-C8 alkanols; ethyl acrylate, n-butyl acrylate, ethylhexyl acrylate and methylmethacrylate are particularly preferred. The emulsion polymerization requires the use of surfactants as stabilizers. Non-ionic surfactants are preferred. Alcohol ethoxylates are particularly preferred. Primer coatings with a hydroxyl number (measured according to ISO 4629) of at least 1 are preferred. Hydroxyl numbers of at least 1,5 are particularly preferred.

Preferably, the minimum film forming temperature during the drying of the primer coating is below 60°C.

In particular embodiments, the primer coating composition comprises at least one pigment. Typical pigments are metal oxides, such as titanium dioxide, iron oxides, spinell pigments, titanates and other oxides, or organic alkaliresistant pigments such as phtalocyanines and azo compounds. Preferably, the pigment volume concentration of the pigmented layer of the conventional coating is in the range of from about 0,01 to about 25%. Pigment volume concentrations in the range of from 0,05 to 20% are particularly preferred.

The primer coating composition generally comprises, besides the polymeric binders and pigments, also usual auxiliaries, e.g. fillers, wetting agents, viscosity modifiers, dispersants, defoamers, preservatives and hydrophobisizers, biocides, fibers and other usual constituents. Examples of suitable fillers are aluminosilicates, silicates, alkalineearth metal carbonates, preferably calcium carbonate in the form of calcite or lime, dolomite, and also aluminum silicates or magnesium silicates, e.g. talc.

The solids content of suitable primer coatings is generally in the range from about 20% to about 60% by weight.

The primer coating compositions comprise as liquid component essentially water and, if desired, an organic liquid miscible with water, for example an alcohol.

The primer coating compositions are applied at a wet coating weight in the range from about 50 to about 500 $g/m^2$, in particular from about 70 to about 300 $g/m^2$, in a known manner, for example by spraying, trowelling, knife application, brushing, rolling or pouring onto the cement bonded board, or by a combination of one or more applications.

In particular embodiments, the primer coating composition used in the processes of the present invention is a styrole acrylate primer.

In particular embodiments, the primer coating composition used in the processes of the present invention is "Natura Walzgrundierung".

A further step in the processes of the invention comprises providing at least one layer of a radiation curable composition on top of the primer layer present on the at least one surface. The radiation curable composition comprises at least one pigment, such as for instance but not limited to one to five different pigments.

In particular embodiments of these processes, the radiation curable composition comprises at least one organic pigment.

The fact that the pigments are integrated in the radiation-curable layer has an important advantage in the process of providing colour-coated fiber cement products. In fact, the radiation-curable layer forms a water-impermeable interface, i.e. a water-tight coating layer. The presence of such a water tight interface has the advantage that alkaline humidity, which is typically present in the fiber cement mass of the fiber cement product, is prevented from migrating from the fiber cement material (through the primer) into this pigmented radiation curable layer. As previously described, alkaline humidity, when contacting pigments, especially organic pigments, causes the pigments to lose their color or to be completely destroyed. However, because of the fact that these pigments are incorporated in a water-tight layer of a radiation curable composition, the alkaline humidity will thus not be able to get into contact with the pigments present in this radiation curable layer. As such, the pigments that are visibly present onto the surface of the fiber cement product are prevented from alkaline destruction and from the inevitable consequences of pigment disintegration, i.e. brownish spots appearing on the surface of the fiber cement product.

Finally, the layer of radiation curable composition is cured by radiation.

In particular embodiments, the radiation curable composition comprises at least one polymer having ethylenically unsaturated double bonds and which is radiation curable.

Possible radiation-curable polymers for the radiation-curable coating composition are in principle any polymers which have ethylenically unsaturated double bonds and which can undergo radical-initiated polymerization on exposure to UV radiation or electron beam radiation.

The monomers having unsaturated double bonds such as acryl amide monomers, meth acrylic acid monomers, (meth) acrylic acid monomers, N - vinyl pyrrolidone and crotonic acid are preferred to be the polymerizable monomer.

Care should be taken here that the content of ethylenically unsaturated double bonds in the polymer is sufficient to ensure effective crosslinking. The content of ethylenically unsaturated double bonds in the is generally in the range from about 0,01 to about 1,0 mol/100g of polymer, more preferably from about 0,05 to about 0,8 mol/100 g of polymer and most preferably from about 0,1 to about 0,6 mol/100 g of polymer. Suitable polymers are for example but not limited to polyurethane derivatives which contain ethylenically unsaturated double bonds, such as polyurethane acrylates.

According to certain embodiments, the radiation curable composition is a UV-curable composition, the UV-curable composition comprising a first polymer A comprising polyurethane derivate containing ethylenically unsaturated double bonds, and a second polymer B being free isocyanate-bearing polyurethanes having ethylenically unsaturated double bonds.

Suitable polymers A are polyurethane derivatives which contain ethylenically unsaturated double bonds, such as polyurethane acrylates.

The radiation-curable composition applied in the process comprises at least one chemically and radiation crosslinkable polymer B.

Suitable polymers B are free isocyanate-bearing polyurethanes having ethylenically unsaturated double bonds. Polyurethane acrylates with free isocyanate groups are preferred. The free isocyanate content of B measured according to DIN EN ISO 11 909, ranges usually from 5 to 20% by weight. Preferably the free isocyanate content of B is between 8 and 20% by weight and more preferably between 10 and 18 % by weight.

The weight ratio of B /A is preferably in the range of 0,03/0,2. A weight ratio of B/A in the range of 0,05/0,1 is particularly preferred.

Besides the polymers A and B, the radiation-curable preparations may also contain a compound different from polymer A and polymer B and having a molecular weight of less than 800 g/mol and capable of polymerization by cationic or free-radical pathways. These compounds have generally at least one ethylenically unsaturated double bond and/or one epoxy group and a molecular weight being less than 800 g/mol. Such compounds generally serve to adjust to the desired working consistency of the radiation-curable preparations. This is particularly important if the preparation contains no other diluents, such as water and/or inert organic solvents, or contains these only to a subordinate extent. Such compounds are therefore also termed reactive diluents. The proportion of reactive diluents, based on the total amount of (A+B) and the reactive diluent in the radiation-curable preparation, is preferably in the range of 0 to 100% by weight, and most preferably in the range of from 5 to 50 % by weight.

Besides the radiation-curable polymer, the radiation-curable coating composition may also contain a different compound having a molecular weight of less than about 800 g/mol and capable of polymerization by cationic or free-radical pathways. These compounds have generally at least one ethylenically unsaturated double bond and/or one epoxy group and a molecular weight being less than about 800 g/mol. Such compounds generally serve to adjust to the desired working consistency of the radiation-curable preparations. This is particularly important if the preparation contains no other diluents, such as water and/or inert organic solvents, or contains these only to a subordinate extent. Such compounds are therefore also termed reactive diluents. The proportion of reactive diluents, based on the total amount of polymer and the reactive diluent in the radiation-curable preparation, is preferably in the range of about 0% to about 90% by weight, and most preferably in the range from about 5% to about 50% by weight. Preferred reactive diluents are the esterification products of di- or polyhydric alcohols with acrylic and/or methacrylic acid. Such compounds are generally termed polyacrylates or polyether acrylates. Hexanediol diacrylate, tripropylene glycol diacrylate and trimethylolpropane triacrylate are particularly preferred.

Radiation-curable coating compositions may also comprise polymers which have cationically polymerizable groups, in particular epoxy groups. These include copolymers of ethylenically unsaturated monomers, the copolymers containing, as comonomers, ethylenically unsaturated glycidyl ethers and/or glycidyl esters of ethylenically unsaturated carboxylic acids. They also include the glycidyl ethers of OH-group-containing polymers, such as OH-group-containing polyethers, polyesters, polyurethanes and novolacs. They include moreover the glycidyl esters of polymers containing carboxylic acid groups. If it is desired to have a cationically polymerizable component, the compositions may comprise, instead of or together with the cationically polymerizable polymers, a low-molecular-weight, cationically polymerizable compound, for example a di- or polyglycidyl ether of a low-molecular-weight di- or polyol or the di- or polyester of a low-molecular-weight di- or polycarboxylic acid.

The radiation-curable compositions comprise usual auxiliaries, such as thickeners, flow control agents, defoamers, UV stabilizers, emulsifiers, surface tension reducers and/or protective colloids. Suitable auxiliaries are well known to the person skilled in the coatings technology. Silicones, particularly polyether modified polydimethylsiloxane copolymers, may be used as surface additives to provide good substrate wetting and good anti-crater performance by reduction of surface tension of the coatings. Suitable stabilizers encompass typical UV absorbers, such as oxanilides, triazines, benzotriazoles (obtainable as Tinuvin™ grades from Ciba Geigy) and benzophenones. These may be used in combination with usual free-radical scavengers, for example sterically hindered amines, e.g. 2,2,6,6-tetramethylpiperidine and 2,6-di-tert-butylpiperidine (HALS compounds). Stabilizers are usually used in amounts of from about 0,1% to about 5,0% by weight and preferably from about 0,3% to about 2,5% by weight, based on the polymerizable components present in the preparation.

The radiation-curable coating composition used in the processes of the invention further comprises one or more pigments. In particular embodiments, the one or more pigments present in the radiation curable coating composition provide color, hiding, and/or are present as extenders. In particular embodiments, the one or more pigments included in the radiation-curable coating composition can be inorganic or organic pigments. Such pigments include but are not limited to those in the form of titanium oxide, iron oxides, calcium carbonate, spinell pigments, titanates, clay, aluminum oxide, silicon dioxide, magnesium oxide, magnesium silicate, barium metaborate monohydrate, sodium oxide, potassium oxide, talc, barytes, zinc oxide, zinc sulfite and mixtures thereof, phtalocyanines and azo compounds.

In particular embodiments, the radiation-curable coating composition comprises one to five different pigments, such as one, two, three, four or five different pigments, which can each independently be organic or inorganic pigments.

In further particular embodiments, the one or more pigments included in the radiation-curable coating composition are organic pigments, such as but not limited to azo-compounds or azopigments, quinazidones and/or phtalocyanines.

In still further particular embodiments of these processes, the radiation-curable coating composition has a pigment volume concentration (PVC) (as defined herein) in the range of about 2% to about 10 %, such as between about 3% and about 9%, such as between about 4% and 8%, such as a PVC of about 5%, about 6% or about 7%.

The radiation-curable coating composition may further comprise usual auxiliaries, e.g. fillers, surfactants, wetting agents, dispersants, defoamers, colorants, waxes, and other usual constituents. Examples of suitable fillers are aluminosilicates, silicates, alkaline-earth metal carbonates, preferably calcium carbonate in the form of calcite or lime, dolomite, and also aluminum silicates or magnesium silicates, e.g. talc.

In addition to the above, the radiation-curable coating composition may comprise one or more additives included for properties, such as regulating flow and leveling, sheen, foaming, yellowing, resistance to stains, cleaner, burnish, block, mildew, dirt, or corrosion, and for retaining color and gloss.

Examples of suitable surface-active dispersing or wetting agents include those available under the trade designations, such as EFKA 4310, EFKA PX 4330, EFKA 7701 (BASF).

Examples of suitable defoamers include but are not limited to BYK 057, BYK 088, BYK 1790, BYK 1791, BYK 1794, BYK 1798 (BYK Cera), EFKA 2721 (BASF).

In addition, coating compositions used for providing the radiation-curable coating composition may include one or more functional extenders to increase coverage, reduce cost, achieve durability, alter appearance, control rheology, and/or influence other desirable properties. Examples of functional extenders include, for example, barium sulphate, aluminum silicate, magnesium silicate, barium sulphate, calcium carbonate, clay, gypsum, silica, and talc.

In further particular embodiments of the processes according to the invention, the radiation-curable coating composition has a hiding power (as defined herein) of about 90% to about 100%.

In particular embodiments, the radiation-curable coating composition is applied as a wet coating weight in the range from about 10 to about 200 $g/m^2$, in particular from about 50 to about 190 $g/m^2$, more in particular from about 100 to about 180 $g/m^2$. In further particular embodiments, the radiation-curable coating composition is applied as a wet coating weight in about 160 $g/m^2$ on the surface of the fiber cement product. In further particular embodiments, the thickness of the radiation curable composition layer ranges from about $10\mu m$ to about $120\mu m$.

The radiation-curable compositions is applied in any known manner, for example by spraying, trowelling, knife application, brushing, rolling, curtain coating or pouring onto the cement bonded board, or by a combination of one or more applications. In particular embodiments, the coating composition is preferably applied by roller coating. It is also conceivable that the preparation may be applied to the cement board by hot-melt processes or by powder-coating processes. The radiation-curable composition is preferably applied by roller-coating. The application may take place either at room temperature or at elevated temperature, but preferably not above 100 °C.

Thus, the coating compositions described herein can be applied to a surface of a fiber cement product using a brush, blade, roller, sprayer (e.g., air-assisted or airless, electrostatic), vacuum coater, curtain coater, flood coater or any suitable device that promotes an even distribution of the coating composition over the surface, even if the surface is damaged, worn, or cracked. The coating compositions may be applied to provide a smooth surface, colored surface or textured surface. A portion or an entire surface of the fiber cement product may be coated at one time. In addition or as an alternative, all or a portion of the surface may be coated more than one time to achieve the desired thickness, gloss, and/or surface effect. The amount of coverage obtained by a quantity of the composition will vary depending on the desire and/or condition of the surface to be covered and the thickness of the coating applied.

In the processes of the invention, the step (iv) of curing the radiation-curable coating composition so as to obtain a fiber cement product of the invention can be performed using any suitable radiation curing method known in the art.

For example, radiation curing of the coating compositions may include curing by heat curing, dual-curing, UV radiation curing, electron beam (EB) curing, LED curing and other curing technologies within a thermoplastic or thermosetting system.

If curing is performed by UV radiation, the preparations to be used comprise at least one photoinitiator. A distinction is to be made here between photoinitiators for free-radical curing mechanisms (polymerization of ethylenically unsaturated double bonds) and photoinitiators for cationic curing mechanisms (cationic polymerization of ethylenically unsaturated double bonds or polymerization of compounds containing epoxy groups). Photoinitiators are not needed for electron beam curable compositions.

Suitable photoinitiators for free-radical photopolymerization, i.e. polymerization of ethylenically unsaturated double bonds, are benzophenone and benzophenone derivatives, such as 4-phenylbenzophenone and 4-chlorobenzophenone, Michler's ketone, anthrone, acetophenone derivatives, such as 1-benzoylcyclohexan-1-ol, 2-hydroxy-2,2-dimethylacetophenone and 2,2-dimethoxy-2-phenylacetophenone, benzoin and benzoin ethers, such as methyl benzoin ether, ethyl benzoin ether and butyl benzoin ether, benzil ketals, such as benzil dimethyl ketal, 2-methyl-1-[4-(methylthio)phenyl]-2-morpholinopropan-1-one, anthraquinone and its derivatives, such as .beta.-methylanthraquinone and tertbutylanthraquinone, acylphosphine oxides, such as 2,4,6-trimethylbenzoyldiphenylphosphine oxide, ethyl-2,4,6-trimethylbenzoylphenylphosphinate and bisacylphosphine oxides.

Suitable photoinitiators for cationic photopolymerization, i.e. the polymerization of vinyl compounds or compounds containing epoxy groups, are aryl diazonium salts, such as 4-methoxybenzenediazonium hexafluorophosphate, benzenediazonium tetrafluoroborate and toluenediazonium tetrafluoroarsenate, aryliodonium salts, such as diphenyliodonium hexafluoroarsenate, arylsulfonium salts, such as triphenylsulfonium hexafluorophosphate, benzene- and toluenesulfonium hexafluorophosphate and bis [4-diphenylsulfoniophenyl] sulfide bishexafluorophosphate, disulfones, such as diphenyl disulfone and phenyl-4-tolyl disulfone, diazodisulfones, imidotriflates, benzoin tosylates, isoquinolinium salts, such as N-ethoxyisoquinolinium hexafluorophosphate, phenylpyridinium salts, such as N-ethoxy-4-phenylpyridinium hexafluorophosphate, picolinium salts, such as N-ethoxy-2-picolinium hexafluorophosphate, ferrocenium salts, titanocenes and titanocenium salts.

The above-mentioned photoinitiators are used, in amounts from about 0,05% to about 20% by weight, preferably from about 0,1% to about 10% by weight and in particular from about 0,1% to about 5% by weight, based on the polymerizable components of the radiation-curable composition.

In particular embodiments, the photo-initiator used for UV-curing in the processes of the present invention is Irgacure® 184. Irgacure® 184 is a highly efficient non-yellowing photoinitiator used to initiate the photo polymerization of chemically unsaturated prepolymers e.g., acrylates - in combination with mono- or multifunctional vinyl monomers.

In particular embodiments, the photo-initiator used for UV-curing in the processes of the present invention is Irgacure® 819. Irgacure® 819 is a versatile photoinitiator for radical polymerization of unsaturated resins upon UV light exposure. It is especially suitable for white pigmented formulations, the curing of glass-fiber-reinforced polyester/styrene systems and for clear coats for outdoor use in combinations with light stabilizers. Thick-section curing is also possible with this photoinitiator.

The radiation-curable coating composition may be cured by exposure to a UV radiation of wavelength generally from about 200 nm to about 600 nm. Suitable examples of UV sources are high and medium pressure mercury, iron, gallium or lead vapor lamps as well as LED arrays. Medium pressure mercury vapor lamps and LED arrays are particularly preferred, e.g. the CK or CK1 sources from the company IST (Institut fur Strahlungstechnologie). The radiation dose usually sufficient for obtaining some degree of crosslinking is in the range from about 80 to about 3000 mJ/cm$^2$.

In particular embodiments of the invention, in order to fully cure a radiation curable composition applied as a surface coating, more than 1000 mJ/cm$^2$ of radiation is necessary.

In particular embodiments of the invention, the step of partially curing the first layer of radiation curable composition is done by irradiation using about 100 to about 800 mJ/cm$^2$.

Any solvent present, in particular water, is dried out before the curing in a separate drying step preceding curing, for example by heating to temperatures in the range from about 40°C to about 80°C, or by exposure to IR radiation.

In case of electron beam curing, irradiation is performed with high-energy electrons (usually from 100 to 350 keV), by applying a high voltage to tungsten filaments inside a vacuum chamber), and the actual curing step takes place in an inert, oxygen-free atmosphere.

In further particular embodiments of these processes, the radiation curable composition layer is covered with a radiation permeable film prior to the curing step. In particular, according to some embodiments, the radiation curable coating layer may be roll-covered with a radiation permeable film before applying radiation. Care is taken to have an intimate sealing contact between the liquid coated panels and the controlled surface layer of the film, in order to remove entrapped bubbles and air pockets between the overlying film and the panel by the roller. This film provides protection against the radical chain-breaking reaction of oxygen, and avoids the use of inert gas atmosphere in the case of electron beam curing. Moreover, this covering film may have a controlled gloss surface with a predetermined surface finish on the side in contact with the liquid coated panel surface. Suitable radiation permeable films are thin plastic films of polyester or polyolefins. The controlled surface gloss on the radiation permeable film can be obtained in various ways, such as embossing, printing, coating, etching or by the use of matting additives. Moreover, the radiation permeable film with its regularly distributed surface micro-roughness can possibly be texturized, e.g. allowing labelling.

In further particular embodiments of these processes, the curing step is preceded by a treatment of the radiation curable composition layer by means of an excimer laser.

The irradiation with an excimer laser influences, i.e. reduces, the gloss of the second layer at its surface, which is typically the outer surface of the fiber cement product. Thus, optionally, after having provided the radiation curable coating layer, and prior to the curing of this layer, the irradiation with an excimer laser may be applied. This results in a low-gloss effect of the uncured coating layer, which is subsequently cured with irradiation, e.g. UV irradiation.

Further finishing techniques may also be applied, including but not limited to PVC flowing or wood flowing.

In a second aspect, the present invention provides fiber cement products obtainable by the processes of the present invention.

In a third aspect, the present invention provides coated fiber cement products comprising:

a cured fiber cement substrate, which is covered on at least part of its surface with

a) a first layer of a primer, and
b) a second layer of a radiation cured composition, which second layer is positioned on top of said first layer, and which radiation cured composition comprises at least one pigment.

In the context of the present invention, fiber cement products are to be understood as cementitious products comprising cement and synthetic (and optionally natural) fibers. The fiber cement products are made out of fiber cement slurry, which is formed in a so-called "green" fiber cement product, and then cured.

Dependent to some extent on the curing process used, the fiber cement slurry typically comprises water, process or reinforcing fibers which are synthetic organic fibers (and optionally also natural organic fibers, such as cellulose), cement (e.g. Portland cement), limestone, chalk, quick lime, slaked or hydrated lime, ground sand, silica sand flour, quartz flour, amorphous silica, condensed silica fume, microsilica, kaolin, metakaolin, wollastonite, mica, perlite, vermiculite, aluminum hydroxide (ATH), pigments, anti-foaming agents, flocculants, and/or other additives.

In particular embodiments, the fiber cement products of the invention have a thickness of between about 4 mm and about 200 mm, in particular between about 6 mm and about 200 mm, more in particular between about 8 mm and about 200 mm, most in particular between about 10 mm and about 200 mm.

The fiber cement products as referred to herein include roof or wall covering products made out of fiber cement, such as fiber cement sidings, fiber cement boards, flat fiber cement sheets, corrugated fiber cement sheets and the like. According to particular embodiments, the fiber cement products according to the invention can be roofing or façade elements, flat sheets or corrugated sheets. According to further particular embodiments, the fiber cement products of the present invention are fiber cement slates, such as air-cured fiber cement slates.

The fiber cement products of the present invention comprise from about 0.1 to about 5 weight%, such as particularly from about 0.5 to about 4 weight% of fibers, such as more particularly between about 1 to 3 weight% of fibers with respect to the total weight of the fiber cement product.

According to particular embodiments, the fiber cement products according to the invention are characterized in that they comprise fibers chosen from the group consisting of cellulose fibers or other inorganic or organic reinforcing fibers in a weight % of about 0.1 to about 5. In particular embodiments, organic fibers are selected from the group consisting of polypropylene, polyvinylalcohol polyacrylonitrile fibers, polyethyelene, cellulose fibres (such as wood or annual kraft pulps), polyamide fibers, polyester fibers, aramide fibers and carbon fibers. In further particular embodiments, inorganic fibers are selected from the group consisting of glass fibers, rockwool fibers, slag wool fibers, wollastonite fibers, ceramic fibers and the like. In further particular embodiments, the fiber cement products of the present invention may comprise fibrils fibrids, such as for example but not limited to, polyolefinic fibrils fibrids % in a weight % of about 0.1 to 3, such as "synthetic wood pulp".

According to certain particular embodiments, the fiber cement products of the present invention comprise 20 to 95 weight % cement as hydraulic binder. Cement in the products of the invention is selected from the group consisting of Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

According to particular embodiments, the fiber cement products according to the invention optionally comprise further components. These further components in the fiber cement products of the present invention may be selected from the group consisting of water, sand, silica sand flour, condensed silica fume, microsilica, fly-ashes, amorphous silica, ground quartz, the ground rock, clays, pigments, kaolin, metakaolin, blast furnace slag, carbonates, puzzolanas, aluminium hydroxide, wollastonite, mica, perlite, calcium carbonate, and other additives (e.g. colouring additives) etc. It will be understood that each of these components is present in suitable amounts, which depend on the type of the specific fiber cement product and can be determined by the person skilled in the art. In particular embodiments, the total quantity of such further components is preferably lower than 70 weight % compared to the total initial dry weight of the composition.

Further additives that may be present in the fiber cement products of the present invention may be selected from the group consisting of dispersants, plasticizers, antifoam agents and flocculants. The total quantity of additives is preferably between about 0.1 and about 1 weight % compared to the total initial dry weight of the composition.

The process for the manufacture of the fiber cement products most widely used is the Hatschek process, which is a modified sieve cylinder paper making machine. Other manufacturing processes are the Magnani process, injection, extrusion, flow-on and others. The Fiber-reinforced cement products are preferably manufactured by the Hatschek process. The green or uncured sheet is optionally post-compressed usually at pressures in the range from 22 to 30 MPa to obtain the desired density and subsequently air-cured for about 5 hours in an oven at a temperature not higher than 80°C.

The sheets are possibly but not necessarily autoclaved, generally within 1 week after production of the uncured sheet, and cured at temperatures in the range of from 160°C to 190°C while subjected to pressures ranging generally from about 0,7 MPa to 1,3 MPa during preferably about 6 to 24 hours.

In particular embodiments, the first layer of primer, which is present on the surface of the fiber cement products, comprises at least one pigment. In further particular embodiments, the primer, which is present on the surface of the fiber cement products, is an acrylic primer. In yet further particular embodiments, the primer, which is present on the surface of the fiber cement products, is a water-based acrylic primer.

In particular embodiments, the second layer of the radiation cured composition of the coated fiber cement products is obtained by applying, on top of the first primer layer present on the surface of the fiber cement product, a second layer of a radiation curable composition and curing this radiation curable composition by radiation as described in detail herein. In yet further particular embodiments, the radiation cured composition of the coated fiber cement products is a UV-cured composition. In other further particular embodiments, the radiation cured composition of the coated fiber cement products is an electron beam cured composition.

In further particular embodiments, the second layer of the radiation cured composition of the coated fiber cement products comprises organic pigments. In certain particular embodiments, the second layer of the radiation cured composition of the coated fiber cement products comprises one to five different pigments.

In further particular embodiments, the second layer of the radiation cured composition of the coated fiber cement products has a hiding power of about 90% to about 100%.

In still further particular embodiments, the second layer of the radiation cured composition of the coated fiber cement products has a pigment volume concentration (PVC) in the range of about 2 to about 10 %.

In yet further particular embodiments, the thickness of the second layer of the radiation cured composition of the coated fiber cement products ranges from about $10\mu m$ to about $120\mu m$.

In particular embodiments, the coated fiber cement products of the present invention are building products.

In further particular embodiments, the coated fiber cement products of the present invention are slates. In other particular embodiments, the coated fiber cement products of the present invention can be used to provide an outer surface to walls, both internal as well as external, a building or construction, e.g. as façade plate, siding, etc.

In particular embodiments, the cured fiber cement substrate of the coated fiber cement products of the present invention is an air-cured fiber cement substrate.

In a fourth aspect, the present invention provides uses of the coloured fiber cement products provided with a coloured coating according to the present invention as a building material. These fiber cement building materials may be porous materials comprising one or more different materials such as a gypsum composite, cement composite, geopolymer composite or other composites having an inorganic binder. The surface of the material may be sanded, machined, extruded, molded or otherwise formed into any desired shape by various processes known in the art. The fiber cement building materials may be fully cured, partially cured or in the uncured "green" state. Fiber cement building materials may further include gypsum board, fiber cement board, fiber cement board reinforced by a mesh or continuous fibers, gypsum board reinforced by short fibers, a mesh or continuous fibers, inorganic bonded wood and fiber composite materials, geopolymer bonded wood and fiber boards, concrete roofing tile material, and fiber-plastic composite material.

In particular embodiments, the fiber cement products of the invention are fiber cement sheets produced by the processes of the present invention and can be used to provide an outer surface to walls, both internal as well as external a building or construction, e.g. as façade plate, siding, etc. In particularly preferred embodiments, the cured fiber cement substrate of the coated fiber cement products of the present invention is an air-cured fiber cement slate.

**Claims**

1. A process for manufacturing coated fiber cement products, wherein said process comprises the steps of:

      (i) providing a cured fiber cement product having at least one surface;
      (ii) applying a primer to the at least one surface of the cured fiber cement product;
      (iii) providing at least one layer of a radiation curable composition to the at least one surface, which radiation curable composition comprises at least one pigment; and
      (iv) curing the layer of radiation curable composition by radiation.

2. The process according to claim 1, wherein said radiation curable composition comprises organic pigments.

3. The process according to claims 1 or 2, wherein said radiation curable composition comprises between one and five different pigments.

4. The process according to any one of claims 1 to 3, wherein said radiation curable composition has a hiding power of between about 90% and 100%.

5. The process according to any one of claims 1 to 4, wherein said radiation curable composition has a pigment volume concentration (PVC) in the range of between about 2% and about 10%.

6. The process according to any one of claims 1 to 5, wherein the thickness of said at least one layer of a radiation curable composition ranges between about 10μm and about 120μm.

7. The process according to any one of claims 1 to 6, wherein said primer comprises at least one pigment.

8. The process according to any one of claims 1 to 7, wherein said primer is an acrylic primer.

9. The process according to any one of claims 1 to 8, wherein said radiation curable composition is a UV-curable composition.

10. The process according to any one of claims 1 to 9, wherein said radiation curable composition is an electron beam curable composition.

11. The process according to any one of claims 1 to 10, wherein said radiation curable composition is an isocyanate-bearing polyurethane having ethylenically unsaturated double bonds.

12. The process according to any one of claims 1 to 11, wherein said curing step is preceded by a treatment of said at least one layer of a radiation curable composition by means of an excimer laser.

13. A coated fiber cement product comprising:

a cured fiber cement substrate, which is covered on at least part of its surface with

a) a first layer of a primer, and
b) a second layer of a radiation cured composition, which second layer is positioned on top of said first layer and which radiation cured composition comprises at least one pigment.

14. The coated fiber cement product according to claim 14, which is a fiber cement slate.

15. Use of the coated fiber cement product according to any of claims 13 or 14 as a roofing building element or as a façade building element.

Europäisches
Patentamt

European
Patent Office

Office européen
des brevets

# EUROPEAN SEARCH REPORT

Application Number

EP 16 20 5161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 201672<br>Thomson Scientific, London, GB;<br>AN 2016-53428M<br>XP002770526,<br>& CN 105 882 042 A (CHEN W)<br>24 August 2016 (2016-08-24)<br>* abstract * | 1-15 | INV.<br>C04B41/71 |
| X | DATABASE WPI<br>Week 201668<br>Thomson Scientific, London, GB;<br>AN 2016-47436A<br>XP002770527,<br>& CN 105 802 482 A (ZHUHAI JIAWEILI ENVIRONMENTAL PROTECTION)<br>27 July 2016 (2016-07-27)<br>* abstract * | 1-15 | |
| X | US 2006/105161 A1 (BRANDENBURGER LARRY B [US] ET AL) 18 May 2006 (2006-05-18)<br>* claims * | 1-15 | TECHNICAL FIELDS SEARCHED (IPC) |
| E | EP 3 106 448 A1 (ETERNIT AG [DE])<br>21 December 2016 (2016-12-21)<br>* claims *<br>* paragraph [0063] *<br>* paragraph [0064] *<br>* paragraph [0131] * | 1-15 | C04B |

The present search report has been drawn up for all claims

| Place of search | Date of completion of the search | Examiner |
|---|---|---|
| Munich | 26 May 2017 | Rosenberger, Jürgen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 5161

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2017

| Patent document cited in search report | | Publication date | Patent family member(s) | | Publication date |
|---|---|---|---|---|---|
| CN 105882042 | A | 24-08-2016 | NONE | | |
| CN 105802482 | A | 27-07-2016 | NONE | | |
| US 2006105161 | A1 | 18-05-2006 | AT | 424376 T | 15-03-2009 |
| | | | AU | 2005302266 A1 | 11-05-2006 |
| | | | CN | 101056831 A | 17-10-2007 |
| | | | EP | 1841716 A1 | 10-10-2007 |
| | | | US | 2006105161 A1 | 18-05-2006 |
| | | | WO | 2006050338 A1 | 11-05-2006 |
| EP 3106448 | A1 | 21-12-2016 | EP | 3106448 A1 | 21-12-2016 |
| | | | WO | 2016202680 A1 | 22-12-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1914215 B1